# EUROPEAN PATENT SPECIFICATION

(11) **EP 3 366 002 B1**
(45) Date of publication and mention of the grant of the patent: **10.03.2021**
(21) Application number: 16857055.4
(22) Date of filing: 29.01.2016
(51) Int. Cl.: H04L 12/26, G05B 19/042, H04L 29/08, H04W 88/00, H04W 4/70, H04W 8/10, H04W 84/18

(54) **ESTABLISHMENT OF OPERATIONAL STATUS OF A MACHINE-TO-MACHINE DEVICE**
FESTLEGUNG DES BETRIEBSZUSTANDS EINER MASCHINE-ZU-MASCHINE-VORRICHTUNG
ÉTABLISSEMENT D'ÉTAT DE FONCTIONNEMENT D'UN DISPOSITIF MACHINE À MACHINE

(30) Priority: 23.10.2015 IN 3436DE2015
(43) Date of publication of application: 29.08.2018
(73) Proprietor: Telefonaktiebolaget LM Ericsson (PUBL), 164 83 Stockholm (SE)
(72) Inventor: DAUNERIA, Ankur, Gurgaon Haryana 122003 (IN); AKHOURI, Sandeep, Gurgaon Haryana 122003 (IN); SINGHAL, Sumit, 371 23 Karlskrona (SE)
(74) Representative: Ericsson
(86) International application number: PCT/IN2016/050030
(87) International publication number: WO 2017/068597

(56) References cited:
- WO-A1-2013/131546
- US-A1- 2003 018 930
- US-B2- 6 892 330
- Ved: "Lightweight Machine to Machine Technical Specification - Candidate Version 1.0", , 10 December 2013 (2013-12-10), XP055253716, Retrieved from the Internet: URL:http://technical.openmobilealliance.or g/Technical/release_program/docs/Lightweig htM2M/V1_0-20131210-C/OMA-TS-LightweightM2 M-V1_0-20131210-C.pdf [retrieved on 2016-02-29]

## Description

### TECHNICAL FIELD

The present invention relates to methods for establishing operational status of a machine-to-machine (M2M) device. The present invention also relates to a M2M server and M2M devices, and to a computer program configured to carry out methods for establishing operational status of a M2M device.

### BACKGROUND

The internet of things (IoT) is a network of physical smart objects such as sensors that exchange information with other sensors, devices or servers, without human interaction. As such, these devices are sometimes referred to as machine-to-machine (M2M) devices. Some examples of services in IoT include built-in sensors in automobiles or homes, heart monitoring implants or smart thermostats systems. Many new protocols have been developed after the introduction of Internet of Things (IoT) including Lightweight Machine to Machine (LWM2M) and constrained application protocol (CoAP), both of which are light and compact application protocols.

M2M devices may communicate with other M2M devices and systems using wireless or wired technology. Regarding wireless technologies, M2M devices may support short range communication technologies such as Bluetooth, Wi-Fi and Zigbee. They may also support long range technologies such as radio communication, however this is more power consuming than short range communication.

It is envisaged that the number of devices for IoT will increase in the coming years, however with the increase in number of devices there is also a greater need to maintain devices and identify inactive or faulty ones so as to reduce resource wastage, computation power wastage, energy wastage and improve network performance.

It is known to provide a single server checking the health or operational status of M2M devices. However, this has its drawbacks such as the single server being a single point of failure, for example, if the server was to fail, then the health checking of the M2M devices would also fail. Additionally, with a server managing several M2M devices, the server either has to wake up all M2M devices before communication, or alternatively, the server has to re-send a health checking request until the M2M devices wake up and respond to the server. Both scenarios result in a significant number of messages sent requiring computing and energy power and resource management, thus putting an undesirable strain on the server and the network.

WO 2013/131546 describes methods and devices for registering M2M sensors with a network node and for acquiring data from the M2M sensors.

### SUMMARY

It is an aim of the present invention to provide methods, apparatus and computer readable media which at least partially address one or more of the challenges discussed above according to the independent claims.

According to an aspect of the invention, there is provided a method performed by a machine-to-machine, M2M, server for establishing an operational status of a M2M device in a M2M network, the method comprising configuring a first M2M device to perform an operational status check on a second M2M device, receiving from the first M2M device the operational status check of the second M2M device.

In one embodiment, if the operational status check indicates that the second M2M device is faulty, the method may further comprise sending to the second M2M device a message for correcting the fault or for inactivating said second M2M device.

In another embodiment, the method further comprises sending a message to the first M2M device for terminating the operational status check of the second M2M device.

When configuring the first M2M device to perform an operational status check, this may comprise the server sending to the first M2M device a light weight machine to machine (LWM2M) object comprising at least one resource.
In one embodiment, the at least one resource comprises an IP address of the second M2M device, a port number on which the first M2M device is to send messages to the second M2M device, an operational status request message for the first M2M device to send to the second M2M device, the frequency of sending the operational status request message to the second M2M device, and an operational status response expected from the second M2M device in response to the operational status request.

In another embodiment, the method further comprises configuring the second M2M device so that the first M2M device can perform the operational status check on said second M2M device.

In yet another embodiment, the configuring of the second M2M device comprises the server sending to the second M2M device a LWM2M object comprising at least one resource.

In one embodiment, the at least one resource comprises an IP address of the first M2M device, a port number on which the second M2M device is to send messages to the first M2M device, an operational status request message expected from the first M2M device, and an operational status response message for the second M2M device to send to the first M2M device in response to the operational status request message.

According to another aspect of the invention, there is provided a machine-to-machine, M2M, server for establishing an operational status of a M2M device in a M2M network, the server comprising a configuration module for configuring the first M2M device to perform an operational status check on the second M2M device, and a transmission module for receiving from the first M2M device the operational status check of the second M2M device.

In one embodiment, the operational status check indicates that the second M2M device is faulty, the transmission module further comprises means for sending to the second M2M device a message for correcting the fault or for inactivating said second M2M device.

In another embodiment, the transmission module further comprises means for sending a message to the first M2M device for terminating the operational status check of the second M2M device.

In yet another embodiment, the configuration module further comprises means for generating a first light weight machine-to-machine (LWM2M) object comprising at least one resource and passing these to the transmission module, and the transmission module further comprising means for sending the first LWM2M object and the at least one resource to the first M2M device so as to configure the first M2M device to perform an operational status check on the second M2M device.

The configuration module may further comprise means for configuring the second M2M device so that the first device can perform the operational status check on said second M2M device.

In one embodiment, the configuration module further comprises means for generating a second LWM2M object comprising at least one resource and passing these to the transmission module, and the transmission module further comprising means for sending the second LWM2M object and the at least one resource to the second M2M device so as to configure the second M2M device so that the first device can perform the operational status check on said second M2M device.

According to another aspect of the invention, there is provided a machine-to-machine, M2M, server for distributing to a first M2M device a health check operation of a second device, the M2M server comprising a processor and a memory, said memory containing instructions that when executed cause M2M server to configure the first M2M device to perform an operational status check on the second M2M device, and receive from the first M2M device the operational status check of the second M2M device.

According to yet another aspect of the invention, there is provide a method performed by a machine-to-machine, M2M, device for establishing an operational status of a second M2M device, the method comprises receiving information from a M2M server to configure itself to perform an operational status check on the second M2M device, and performing the operational status check on the second M2M device and sending said operational status check to the M2M server.

In one embodiment, the first M2M device only sends the operational status check of the second M2M device to the M2M server if the operational status check indicates that the second M2M device is faulty.

In another embodiment, the method further comprises receiving a message from the M2M server for terminating performing operational status check on the second M2M device.

In yet another embodiment, the information received from the M2M server comprises an operational status request message and an operational status response message expected to be received from the second M2M device, and the frequency of sending the operational status request message to the second M2M device.

Performing the operational status check on the second M2M device may comprise sending an operational status request message to the second M2M device and receiving from the second M2M device an operational status response message.

In one embodiment, the method further comprises comparing the operational status response message received from the second M2M device with the operational status response message received from the M2M server.

If the operational status response messages do not match then the second M2M device may be faulty.

According to an aspect of the invention, there is provided a machine-to-machine, M2M, device for establishing an operational status of a second M2M device, the M2M device comprises a transmission module for receiving information from a M2M server, and a configuration module for configuring itself based on the information received so as to perform an operational status check on the second M2M device, and a status check module for performing the operational status check on the second M2M device, and where the transmission module further comprises means for sending said operational status check to the M2M server.

In one embodiment, the transmission module comprises means for only sending the operational status check of the second M2M device to the M2M server if the operational status check indicates that the second M2M device is faulty.

In another embodiment, the transmission module further comprises means for receiving a message from the M2M server to terminate performing operational status check on the second M2M device.

In yet another embodiment, the transmission module further comprises means for sending an operational status request message to the second M2M device and receiving from the second M2M device an operational status response message

In one embodiment, the information received from the server comprises an operational status response message expected to be received from the second M2M device and the status check module further comprises means for comparing the expected operational status response message and the operational status response message received from the second M2M device so as to determine if the second M2M is faulty.

In another embodiment, if the operational status response messages do not match then the status check module determines that the second M2M device is faulty.

According to yet another aspect of the invention, there is provided a machine-to-machine, M2M, device for establishing an operational status of a second M2M device, the M2M device comprising a processor and a memory, said memory containing instructions that when executed causes the M2M device to receive information from a M2M server to configure itself to perform an operational status check on the second M2M device, and perform the operational status check on the second M2M device and send said operational status check to the M2M server.

According to a further aspect of the invention, there is provided an apparatus comprising a M2M device as described above wherein the apparatus is a vehicle, user equipment or an appliance.

According to yet a further aspect of the invention, there is provided a method performed by a machine-to-machine, M2M, device, for establishing its operational status, the method comprises receiving information from a M2M server and configuring itself based on said information so that its operational status can be checked by another M2M device, and receiving an operational status request from the other M2M device, and sending an operational status response to said other M2M device.

In one embodiment, the information received from the server comprises an operational status request expected to be received from the other M2M device and an operational status response to send to the other device upon receiving an operational status request.

In another embodiment, the information received from the server further comprises authorization information.

According to another aspect of the invention, there is provided a machine-to-machine, M2M, device, for establishing its operational status, the device comprises a transmission module for receiving information from a M2M server, a configuration module for configuring itself based on said information so that its operational status can be checked by another M2M device, and wherein the transmission module further comprises means for receiving an operational status request from the other M2M device, and sending an operational status response to said other M2M device.

In one embodiment, the information received from the server comprises an operational status request expected to be received from the other M2M device and an operational status response to send to the other device upon receiving an operational status request.

In another embodiment, the information received from the server further comprises authorization information.

According to another aspect of the invention, there is provided a machine-to-machine, M2M, device for establishing an operational status of a second M2M device, the M2M device comprising a processor and a memory, said memory containing instructions that when executed causes the M2M device to receive information from a M2M server and configuring itself based on said information so that its operational status can be checked by another M2M device, and receive an operational status request from the other M2M device, and send an operational status response to said other M2M device.

According to another aspect of the invention, there is provided an apparatus comprising a M2M device as described above, wherein the apparatus is a vehicle, user equipment or an appliance.

According to yet another aspect of the invention, there is provided a system for establishing an operational status of a machine-to-machine, M2M, device, the system comprising a M2M server comprising means for configuring a first M2M device to perform an operational status check on a second M2M device, the M2M server comprising further means for configuring the second M2M device so that the first M2M device can perform said operational status check on the second M2M device, the first M2M device comprising means for obtaining the operational status check from the second M2M device and sending the operational status check to the M2M server.

According to a further aspect of the invention, there is provided a computer program which, when run on a computer, causes the computer to carry out a method according to any of the methods described above.

According to yet a further aspect of the invention, there is provided a computer program product comprising computer readable storage medium and a computer program as described above.

### BRIEF DESCRIPTION OF THE DRAWINGS

For a better understanding of the present invention, and to show more clearly how it may be carried into effect, reference will now be made, by way of example, to the following drawings in which:
Figure 1 is a schematic illustration of a M2M server configuring M2M devices;
Figure 2 is a schematic illustration of M2M devices performing an operational status check on one another;
Figure 3 is another schematic illustration of M2M devices performing an operational status check on one another;
Figure 4 is a schematic illustration of LWM2M architecture;
Figure 5 is a schematic illustration of LWM2M enabler;
Figure 6 is a schematic illustration of LWM2M protocol stack;
Figure 7 is a message flow illustrating an example of a method of the present invention;
Figure 8 is a flow chart illustrating process steps in a method performed by a M2M server;
Figure 9 is a flow chart illustrating process steps in a method performed by a M2M server;
Figure 10 is a flow chart illustrating process steps in a method performed by a M2M device;
Figure 11 is a flow chart illustrating process steps in a method performed by a M2M device;
Figure 12 is a flow chart illustrating process steps in a method performed by another M2M device;
Figure 13 is a block diagram illustrating a M2M server;
Figure 14 is a block diagram illustrating a M2M device;
Figure 15 is a block diagram illustrating another M2M device;
Figure 16 is a block diagram illustrating another example of a M2M server;
Figure 17 is a block diagram illustrating another example of a M2M device;
Figure 18 is a block diagram illustrating yet another example of M2M device;
Figure 19 is a block diagram illustrating another example of a M2M server;
Figure 20 is a block diagram illustrating another example of a M2M device; and
Figure 21 is a block diagram illustrating yet another example of M2M device.

### DETAILED DESCRIPTION

Aspects of the present invention provide methods for establishing operational status of a machine-to-machine (M2M) device. Aspects of the invention make use of M2M devices of a M2M network checking the operational status of one another M2M device and reporting back to a managing server or a M2M server. Thus, the operational status check relies on a distributed responsibility of M2M devices checking the operational status or health of its neighbouring M2M devices.

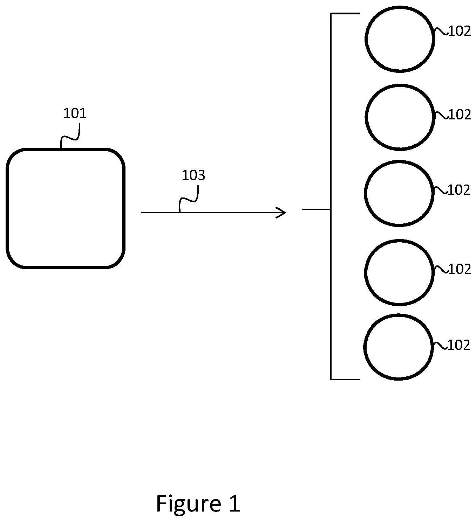

Figure 1 illustrates a M2M server 101 and a plurality of M2M devices 102 belonging to the same M2M network. The M2M sever 101 and the M2M devices 102 are configured to communicate with one another via any appropriate wireless technology such as Bluetooth, Wi-Fi and Zigbee, as well as radio based communication developed by third Generation Partnership Project (3GPP). It is also envisaged that the M2M devices and the M2M server may be configured to communicate with one another using wired technology.

The M2M devices, as well as any reference to a M2M device herein, should be understood to be any device which is configured or configurable to communicate with another device, server or system without human interaction. The M2M device may for example be a sensor for light, pressure, temperature, vibration or actuators. The M2M device may form part of an apparatus such as a vehicle, an appliance (including a fridge, freezer or central heating), or a user equipment (such as a mobile phone, laptop, smart phone, wireless communication device).

In order to maintain the network, any faulty M2M devices need to be identified and then inactivated or repaired. In figure 1, the M2M server 101 configures 103 each M2M devices to carry out health checks on neighbouring M2M device or in other words establish operational status of neighbouring M2M devices. Should a faulty M2M device be identified by one of the other M2M devices, then M2M device which carried out the check reports back to M2M server 101 such that the M2M server 101 or any other designated node can take the appropriate action to maintain the network.

The M2M server 101 configures the M2M devices 102 such that they can carry out a health check on one or several neighbouring M2M devices 102. The server can determine which M2M device 102 should carry out a check on which M2M device 102 by for example using GPS location or signal strength of the M2M devices 102. Preferably, the M2M server 101 configures M2M devices 102 to check on other M2M devices 102 that are nearby so as to minimise data transmission through the network.

The M2M server 101 can configure all M2M devices 102 of the M2M network, or alternatively it can configure only some of the M2M devices 102. Furthermore, the M2M server 101 can also configure M2M devices based on particular criteria such as geographical locations, application types, service types or traffic class types.

When the M2M server 101 is configuring the M2M devices 102, the configuration may have the following data-structure which would enable policy driven health-check communication between nodes in a M2M network;
- Number of nodes allowed to send a health check message
- Network identity of the nodes allowed to send the health check message
- Number of nodes allowed to receive a health check message
- Network identity of the nodes allowed to receive the health check message
- Duration of sending the health check message
- Frequency of sending the health check message
- Sleep cycle sensitive (Y/N) (For example, whether the health check can be carried out when the monitored M2M device is sleeping.)
- M2M server ID for reporting any identified faulty devices

It should be understood that the term "faulty" M2M device used herein includes a device that is not working correctly, for example it may be an anomaly device, inactive device or a misbehaving device.

Furthermore, it should be understood that carrying out a health check comprises establishing the operational status of a device. For example, the operational status may be that the device is operating normally or that it is faulty.

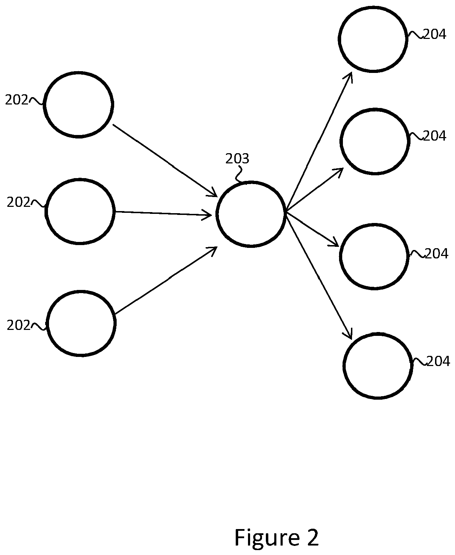

Figure 2 illustrates M2M devices 202 that have been configured to carry out a health check. M2M devices 202 have been configured by the M2M server to carry out a health check (or request operational status) of M2M device 203. M2M device 203 has been configured by the M2M server to allow M2M devices 202 to carry out a health check on it, and for it to carry out a health check on M2M devices 204. Thus, similarly, M2M devices 204 have been configured to allow M2M device 203 to perform a health check on each of them.

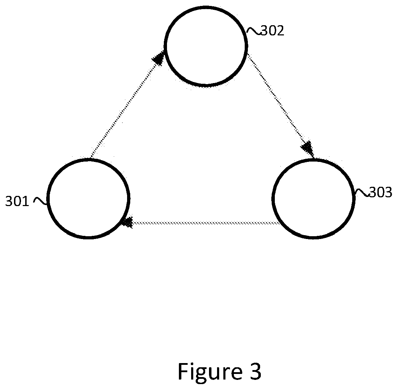

In another structure as shown in figure 3, M2M device 301 is configured to carry out a health check on M2M device 302, and to allow M2M device 303 to carry out a health check on it. M2M device 302 is configured by the M2M server to carry out a health check on M2M device 303, and to allow M2M device 301 to carry out a health check on it. Similarly, M2M device 303 is configured by the M2M server to carry out a health check on M2M device 301, and to allow M2M device 302 to carry out a health check on it.

The structures shown in figures 2 and 3 are examples of how the responsibility of establishing the operational status of M2M devices in a M2M network can be distributed such that it is not the full responsibility of a M2M server. Advantageously, there is no single point of failure and the resources of the M2M server are alleviated from some of the operational tasks in comparison to a M2M server that carries out a health check on all the nodes in a M2M network.

The structures in figures 2 and 3 are examples only and it should be understood that any number of M2M devices and distribution of health checking responsibilities fall within the scope of the present invention.

An example will now be described of how a M2M server can configure M2M devices to carry out a health check or in other words establish the operational status of another M2M device.

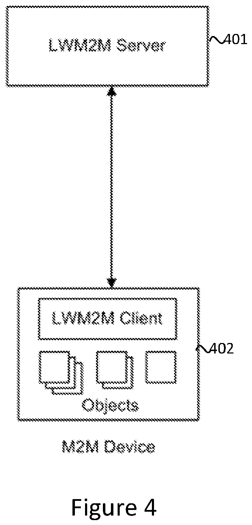

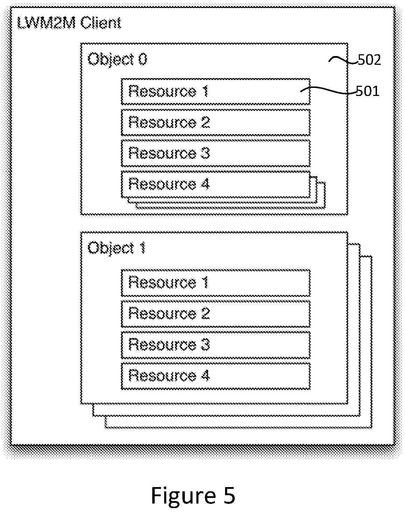

This example is based on a protocol developed by Open Mobile Alliance (OMA), namely Lightweight Machine to Machine (LWM2M). This protocol is is a light and compact application layer communication protocol , and it enables servers to communicate with devices such as sensors. The LWM2M enabler comprises two components; a LWM2M server 401 and LWM2M client 402 as is shown in figure 4. The LWM2M client 402 forms part of a M2M device such as a sensor. As illustrated in figure 5, the LWM2M enabler defines a simple resource model where each piece of information made available by the LWM2M client is a "resource" 501. Resources are logically organized into "objects" 502. The LWM2M client 503 may have any number of resources, each of which belongs to an object. Resources 501 and objects 502 have the capability to have multiple instances or configurations of resources or objects.

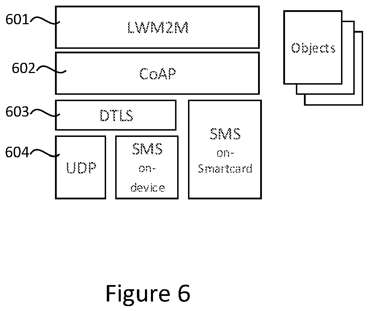

Figure 6 illustrates the protocol stack of the LWM2M enabler and it shows that LWM2M protocol 601 is running on top of constrained application protocol (CoAP) 602 as described in Internet Standard Document, RFC 7252. The CoAP 602 is in itself running on top of datagram transport layer security (DTLS) 603 and the LWM2M protocol utilizes DTLS 603 for authentication, data integrity and confidentiality purposes. As seen in figure 6, DTLS 603 is running on top of user datagram protocol (UDP) 604. Examples of the present invention are capable of detecting failure in M2M devices occurring in the UDP layer 604, CoAP layer 602 and the LWM2M layer 601.

According to an aspect of the present invention, a M2M server can configure a M2M device to establish the operational status of another M2M device by sending to the M2M device a LWM2M object comprising at least one resource. The M2M device will be preconfigured to operate using the LWM2M protocol and so can easily implement the object and at least one resource. Examples of resources included in the object sent from a M2M server to a (monitoring or first) M2M device that is to check another (monitored or second) M2M device include; an IP address of the monitored M2M device, a port number on which the monitoring M2M device is to send messages to the monitored M2M device, an operational status request message for the monitoring M2M device to send to the monitored M2M device, the frequency of sending the operational status request message to the monitored M2M device, and an operational status response expected from the monitored M2M device in response to the operational status request. Another example of a resource is information as to whether the health check feature or the operational status check feature is to be enable or disabled. For example, the M2M server can set this value to "True" to enable the functionality. This means that the M2M server can easily enable and disable the health checking function of a configured M2M device.

An example of a (first) object to be sent from a M2M server to a (first or monitoring) M2M device in order to configure the M2M to check the operational status or do a health check on another M2M device is shown below.

### First object - Resource definitions

| **ID** | **Name** | **Operations** | **Instances** | **Mandatory** | **Type** | **Description** |
|---|---|---|---|---|---|---|
| 0 | RemoteIPAddress | RW | Single | Mandatory | String | This resource provides a remote IP Address of the monitored M2M device (ie. the device that is to be monitored) |
| 1 | RemotePort | RW | Single | Mandatory | Integer | This resource represents the port number of the monitored M2M device. |
| 2 | HealthCheckReqMsg | RW | Single | Mandatory | String | This resource represents the health check message to be sent to the monitored M2M device. This can be kept simple to prevent excessive processing and storage. |
| 3 | HealthCheckRespMsg | RW | Single | Mandatory | String | This resource represents the response message expected of the monitored M2M device in response to a health request message. This is provisioned to keep the processing simple and validation could be done by just comparing a string in the received response with the expected response. |
| 4 | HealthCheckFrequency | RW | Single | Optional | Integer | This resource represents the frequency at which the health check messages shall be exchanged in seconds. The M2M server can consider sleep cycles of various M2M devices to provision an appropriate frequency of health checking. Default value may be 30 seconds. |
| 5 | EnableHealthCheck | E | Single | Mandatory | Boolean | This resource represents the flag to control the health check feature. The M2M Server can set its value to True to enable this functionality. |

Examples of resources included in an (second) object sent by a M2M server to a (second monitored) M2M in order to configure the M2M device to allow another (first or monitoring) M2 device to establish the operational status of the (monitored) M2M device include; an IP address of t monitoring M2M device, a port number on which the monitored M2M device is to send messages the monitoring M2M device, an operational status request message expected to be received from t monitoring M2M device, and an operational status response to be sent from the monitored M2 device to the monitoring device in response to the operational status request. Another example of resource is information as to whether to enable the health check feature or the operational status che feature. For example, the M2M server can set this value to "True" to enable the functionality. Th means that the M2M server can easily enable and disable the health checking function of a configur M2M device

Further examples of resources included in a (second) object sent by a M2M server to a (second monitored) M2M device are listed below.

### Second object - Resource definitions

| **ID** | **Name** | **Operations** | **Instances** | **Mandatory** | **Type** | **Description** |
|---|---|---|---|---|---|---|
| 0 | PermittedIPAddress | RW | Single | Mandatory | String | This resource provides the permitted IP Address of the monitoring M2M device that is allowed to send health check message to the monitored M2M client. |
| 1 | PermittedPort | RW | Single | Mandatory | Integer | This resource represents the permitted port number of the monitoring M2M device that is allowed to send health check message to the monitored M2M device. |
| 2 | HealthCheckRecdMsg | RW | Single | Mandatory | String | This resource represents the health check message to be received by the monitored M2M device from the permitted monitoring M2M device. This can be kept simple to prevent excessive processing and storage. |
| 3 | HealthCheckRespMsg | RW | Single | Mandatory | String | This resource represents the response message to be sent to the monitoring M2M device in response to a health request received from the monitoring M2M device. |
| 4 | EnableHealthCheckReceiver | E | Single | Mandatory | Boolean | This resource represents the flag to control the health check receiver feature. The LWM2M Server can set its value to True to enable this functionality. |

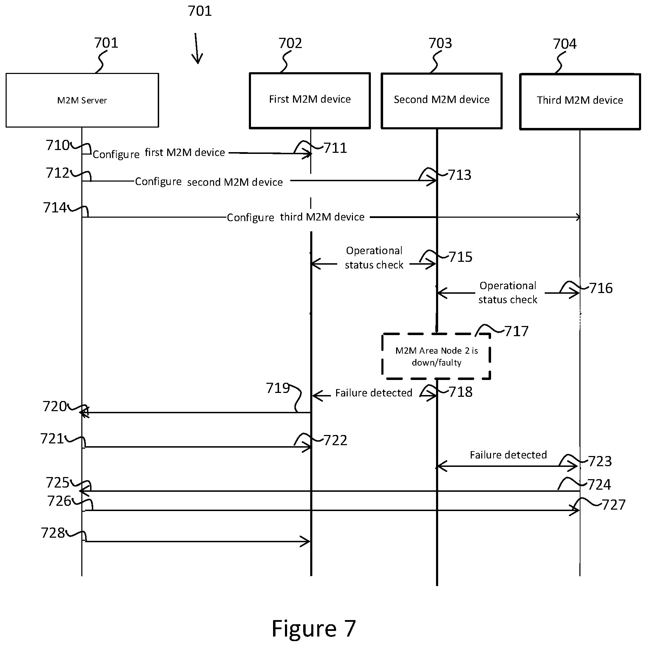

An example of a method 700 for establishing an operational status of a M2M device will now be described with reference to figure 7. Figure 7 illustrates a M2M server 701, a first (monitoring) M2M device 702, a second (monitored) M2M device 703, and a third (monitoring) M2M device 704 communicating with one another with wireless communication. The M2M server 701 configures the first M2M device 702 by sending a message 710 comprising the first object described above. As previously mentioned this object comprises resources relating to an IP address of the second M2M device 703, a port number on which the first M2M device 702 is to send messages to the second M2M device 703, an operational status request message for the first M2M device 702 to send to the second M2M device 703, the frequency of sending the operational status request message to the second M2M device 703, and an operational status response expected from the second M2M device 703 in response to the operational status request.

The first M2M device 702 receives 711 the message from the M2M server and implements the object into its LWM2M enabler. The first M2M device 702 is now configured by the M2M server 701 to carry out a health check or an operational status check on the second M2M device 703.

The M2M server 701 then configures the second M2M device 703 by sending it a message 712 comprising an object based on the second object described above. This object comprises resources relating to an IP address of the first M2M device 702 and the third M2M device 704, a port number on which the second M2M device is to send messages to the first M2M device 702, a port number on which the second M2M device is to send messages to the third M2M device 704, an operational status request message expected from the first M2M device 702 and the third M2M device 704, and an operational status response message for the second M2M device 703 to send to the first M2M device 702 and the third M2M device 704 in response to the operational status request message.

The second M2M device 703 receives 713 the message from the M2M server 701 and implements the second object into its LWM2M enabler. The second M2M device 703 is now configured to allow the first and the third M2M device 702, 704 to perform an operational status check on said second M2M device 703.

The M2M server then also configures the third M2M device 704 so as to perform an operational status check on the second M2M device 703. The M2M server does so by sending a message 714 to the third M2M device 704, the message comprising an object based on the first objection described above. This object comprises resources relating to an IP address of the second M2M device 703, a port number on which the third M2M device 704 is to send messages to the second M2M device 703, an operational status request message for the third M2M device 704 to send to the second M2M device 703, the frequency of sending the operational status request message to the second M2M device 703, and an operational status response expected from the second M2M device 703 in response to the operational status request.

The third M2M device 704 receives the message from the M2M server 701 and implements the object into its LWM2M enabler. The third M2M device 704 is now configured by the M2M sever 701 to carry out a health check or an operational status check on the second M2M device 703.

It should be understood that the configuration of the first, second and third devices can be done in any particular order and is not limited to the order shown in figure 7.

Once the M2M devices have been configured, the first and third M2M devices 702, 704 start to perform an operational status check on the second M2M device 703. They do so by periodically sending health check messages (operational status request messages) and by receiving health check response messages (operational status response messages) as represented by message exchange 715 and 716 in figure 7. The first and third M2M devices 702, 704 determine if the second M2M device 703 is faulty by comparing the operational status response message received from the second M2M device with the operational status response message received from the M2M server in the object. In particular, the first and third M2M devices 702, 704 may do so by comparing a string of data comprised in the operational status response message received from the second M2M device with a string of data comprised in the expected operational status response message received from the M2M server in the object. If the operational status response message received from the second M2M device 703 matches the expected operational status response message then the first and third M2M devices 702, 704 determine that the second M2M device 703 if operating normally. If they do not match then the first and third M2M devices 702, 704 determine that the second M2M device 703 is faulty.

In step 717, the second M2M device becomes faulty.
When the first M2M device 702 carries out its next operational status check 718, it determines that the second M2M device is faulty as the operational status response message received from the second M2M device 703 does not match the expected operational status response message received from the M2M server as described above.

The first M2M device 702 sends 719 a message to the M2M server 701 reporting that the second M2M device 703 is faulty. Upon receiving 720 the message reporting that the second M2M device is faulty, the M2M server stores this information, and sends 721 a message to the first M2M device 702 to terminate or stop performing the operational status check on the second M2M device 703.

Upon receiving 722 the message to terminate the operational status check on the second M2M device 703, the first M2M device 702 disables the functionality of performing the operational status check. This reduces unnecessary processing and traffic once the fault is detected.

In the next step, the third M2M device 704 carries out its next operational status check 723. From this, it determines that the second M2M device 703 is faulty as the operational status response message received from the second M2M device 703 does not match the expected operational status response message received from the M2M server as described above.

The third M2M device 704 sends 724 a message to the M2M server 701 reporting that the second M2M device 703 is faulty. Upon receiving 725 the message reporting that the second M2M device is faulty, the M2M server 701 stores this information, and sends 726 a message to the third M2M device 704 to terminate or stop performing the operational status check on the second M2M device 703.

Upon receiving 727 the message to terminate the operational status check on the second M2M device 703, the third M2M device 704 disables the functionality of performing the operational status check. This reduces unnecessary processing and traffic once the fault is detected.

The M2M server 701 has now received information from two M2M devices that the second M2M device 703 is faulty and so it sends 728 a message to the second M2M device for deactivating or repairing the second M2M device. Alternatively, the M2M server 701 can designate another node to deactivate or repair the second M2M device. In yet another example, the M2M server 701 may report to higher layers of the faulty device.

It should be understood that the M2M server 701 does not have to receive information from two or more M2M devices before taking corrective action of the second M2M device 703, it may be that the M2M server 701 address the second M2M device 703 after having received information of it being faulty from one M2M device.

In the above examples, the monitoring M2M devices can be configured to take into account sleep cycles of the M2M devices they are monitoring. This may be achieved by configuring the frequency that the monitoring M2M device is sending the operational status request message.

Furthermore, in the above example, the M2M devices 702, 703, 704 can be reconfigured at any time by the M2M server sending new objects to each M2M device. It may also be that the M2M server disables any operational status check on every M2M device such that it assumes full responsibility of these checks. It may later send new objects to the M2M devices so as to distribute the responsibility and so as to change the structure of which device is checking on which device.

The method 700 enables the M2M server 701 to distribute the responsibility of monitoring and detecting the M2M devices 702, 703, 704 in its network. This means that there is no single point of failure and the M2M server is not overloaded with processing messages. The invention is particularly useful as the number of M2M devices in a M2M network increases such that it becomes unfeasible for a single M2M server to manage the operational status or health check of all M2M devices connected to the same network as the M2M server.

In another example of the present invention, the M2M server and M2M devices do not use LWM2M protocol to configure the M2M devices to perform operational status checks on one another. Instead, the UDP is used to exchange health check information in the form of UDP packets. In this example, the M2M server does not take any corrective action until it has received confirmation from at least two M2M devices that another M2M device is down. This type of redundancy of operational status checks takes away the connectionless attributes of UDP however it still serves as a reliable method for operational status check even when the messages are not sent frequently.

UDP can not only be used to identify faults in the UDP layer but also in the CoAP and the LWM2M layers. For example, a UDP response message will still be sent in response to a UDP health check message, however if the UDP message is malformed or empty, it indicates that the M2M sending the UDP response message is faulty.

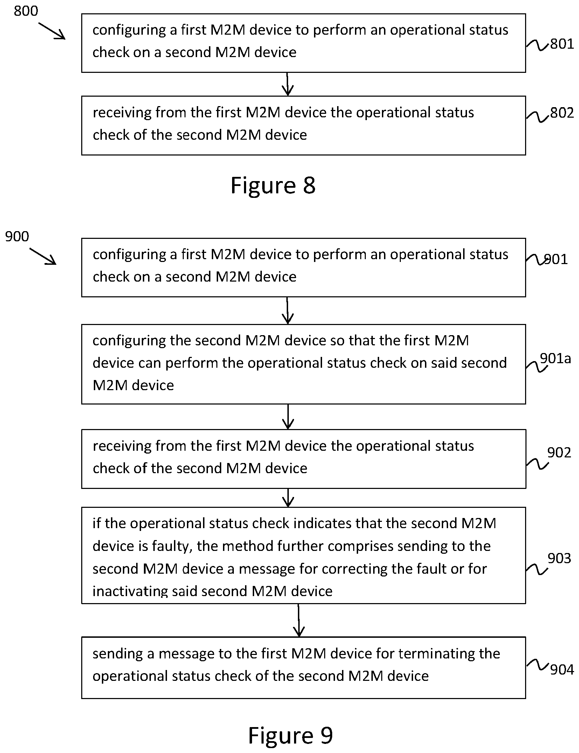

A method 800 implemented by any of the M2M servers described above will now be described with reference to figure 8. The method 800 is performed by a M2M server for establishing an operational status of a M2M device in a M2M network. The method comprises the step of configuring a first M2M device to perform an operational status check on a second M2M device 801, and receiving from the first M2M device the operational status check of the second M2M device 802.

This method enables the M2M server to distribute the responsibility and workload of checking the operational status or health of M2M devices.

Another method 900 will now be described with reference to figure 9. This method is also performed by a M2M server and it comprises the same steps as that of method 800 such that step 801 and 802 correspond to 901 and 902. However, it also comprises some additional optional steps as will now be described.

In one step 901a, the M2M server may also configure the second M2M device so that the first M2M device can perform the operational status check on said second M2M device

Furthermore, if the operational status check indicates that the second M2M device is faulty, the method may further comprise sending to the second M2M device a message for correcting the fault or for inactivating said second M2M device, step 903.

In step 904, the method 900 may further comprise the M2M server sending a message to the first M2M device for terminating the operational status check of the second M2M device.

Although not shown in figure 900 it should be understood that configuring the first M2M device to perform an operational status check as shown in step 901 may comprise the server sending to the first M2M device a light weight machine to machine (LWM2M) object comprising at least one resource. The at least one resource may comprises an IP address of the second M2M device, a port number on which the first M2M device is to send messages to the second M2M device, an operational status request message for the first M2M device to send to the second M2M device, the frequency of sending the operational status request message to the second M2M device, and an operational status response expected from the second M2M device in response to the operational status request.

It is also envisaged that the configuring of the second M2M device may comprise the server sending to the second M2M device a LWM2M object comprising at least one resource. The at least one resource may comprise an IP address of the first M2M device, a port number on which the second M2M device is to send messages to the first M2M device, an operational status request message expected from the first M2M device, and an operational status response message for the second M2M device to send to the first M2M device in response to the operational status request message.

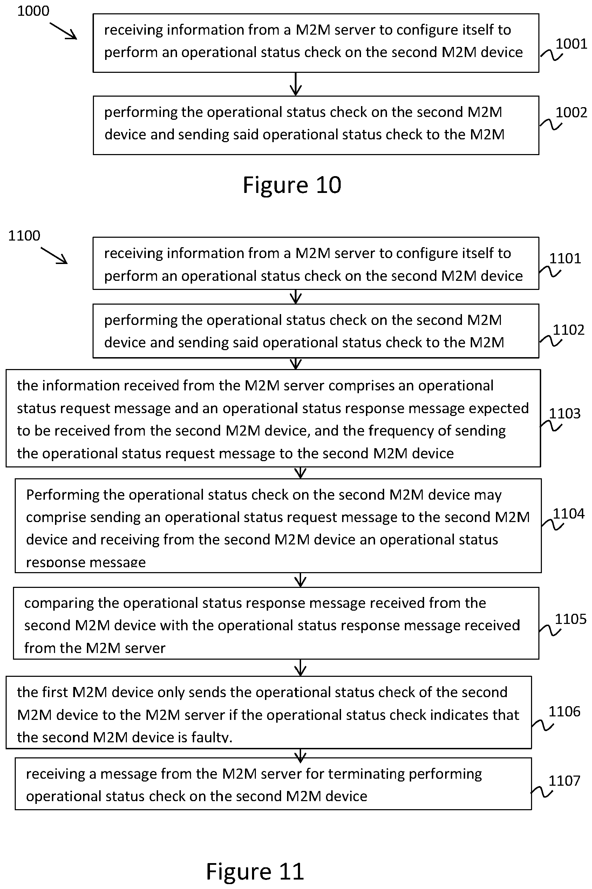

Another method 1000 performed by a M2M device such as a first M2M device or a monitoring device described above, will now be described with reference to figure 10. This method 1000 is for establishing an operational status of a second M2M device and the method comprises receiving information from a M2M server to configure itself to perform an operational status check on the second M2M device, step 1001, and performing the operational status check on the second M2M device and sending said operational status check to the M2M server, step 1002.

Another method 1100 will now be described with reference to figure 11. This method is also performed by a M2M device and it comprises the same steps as that of method 1000 such that step 1001 and 1002 correspond to 1101 and 1102. However, it may also comprise some additional optional steps as will now be described.

The information received from the M2M server may comprise an operational status request message and an operational status response message expected to be received from the second M2M device, and the frequency of sending the operational status request message to the second M2M device, step 1103.

Performing the operational status check on the second M2M device may comprise sending an operational status request message to the second M2M device and receiving from the second M2M device an operational status response message, step 1104.

The method may further comprise comparing the operational status response message received from the second M2M device with the operational status response message received from the M2M server, step 1105. If the operational status response messages do not match then the second M2M device is faulty.

In one example, the method 1100 may comprise such that the first M2M device only sends the operational status check of the second M2M device to the M2M server if the operational status check indicates that the second M2M device is faulty, step 1106.

The method 1100 may further comprise receiving a message from the M2M server for terminating performing operational status check on the second M2M device, step 1107.

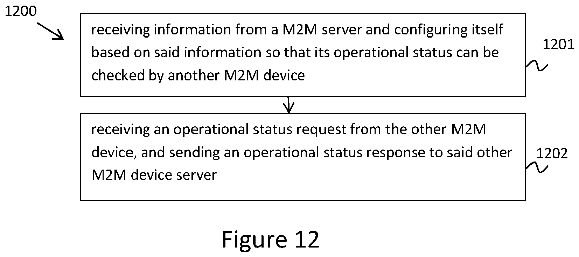

Another example of a method performed by M2M device will now be described with reference to figure 12. This M2M device is a second or a monitored M2M device as described above and the method is for establishing its operational status. The method 1200 comprises receiving information from a M2M server and configuring itself based on said information so that its operational status can be checked by another M2M device, step 1201, and receiving an operational status request from the other M2M device, and sending an operational status response to said other M2M device, step 1202. The information received from the server may comprise an operational status request expected to be received from the other M2M device and an operational status response to send to the other device upon receiving an operational status request. The information received from the server may further comprise authorization information such as IP address of the said other M2M device and port number on which said other M2M device is to send messages to the M2M device.

The above described methods 800, 900, 1000, 1100 and 1200 may be performed by elements cooperating to form a system for establishing operational status of a M2M device. Such a system is illustrated in figure 7 and it comprises a M2M server 701 comprising means for configuring a first M2M device 702 to perform an operational status check on a second M2M device 703. The M2M server further comprises means for configuring the second M2M device so that the first M2M device can perform said operational status check on the second M2M device. The first M2M device comprises means for obtaining the operational status check from the second M2M device and sending the operational status check to the M2M server.

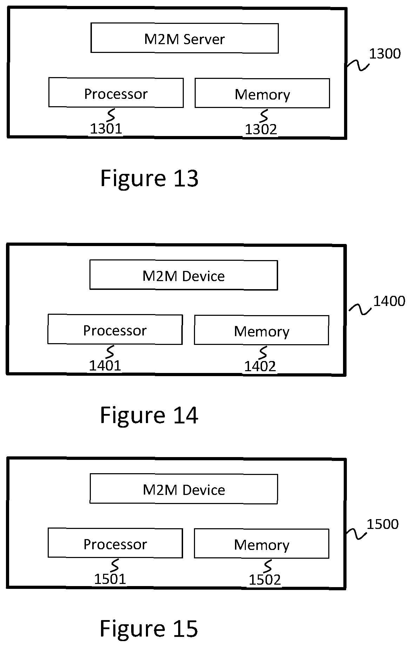

The methods of the present invention, as illustrated by the above examples, may be conducted on receipt of suitable computer readable instructions, which may be embodied within a computer program running on the M2M server or any of the M2M devices. Figures 13, 14 and 15 illustrate examples of the M2M server, M2M device performing the operational status check and the M2M device on which the operational status check is performed, respectively, which may execute the methods of the present invention, for example on receipt of suitable instructions from a computer program. Referring to figures 13, 14 and 15, each of the M2M server 1300, M2M device 1400 performing the operational status check and the M2M device 1500 on which the operational status check is performed, comprises a processor 1301, 1401, 1501 and memory 1302, 1402, 1502. The memory 1302, 1402, 1502 contains instructions executable by the processor 1301, 1401, 1501 such that the M2M server 1300 is operative to carry out the methods 800 and 900, the M2M device 1400 is operative to carry out methods 1000 and 1100, and the M2M device 1500 is operative to carry out method 1200.

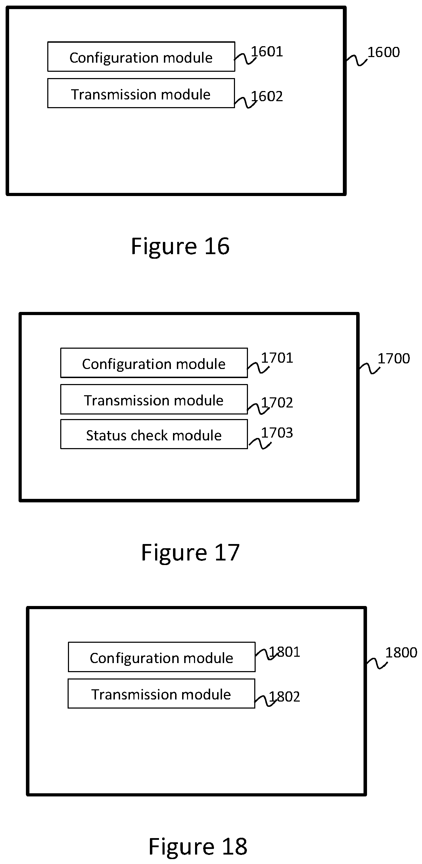

Figure 16 illustrates functional units in another embodiment of a M2M server 1600 which may execute methods 800 and 900, for example according to computer readable instructions received from a computer program. It will be understood that the units illustrated in figure 16 are software implemented functional units, and may be realized in any appropriate combination of software modules. The software modules may be executed by a processor.

Referring to figure 16, the M2M server comprises a configuration module 1601 for configuring the first M2M device to perform an operational status check on the second M2M device, and a transmission module 1602 for receiving from the first M2M device the operational status check of the second M2M device.

If the operational status check indicates that the second M2M device is faulty, the transmission module 1602 may further comprise means for sending to the second M2M device a message for correcting the fault or for inactivating said second M2M device.

The transmission module 1602 may further comprise means for sending a message to the first M2M device for terminating the operational status check of the second M2M device.

The configuration module 1601 may further comprise means for generating a first light weight machine-to-machine (LWM2M) object comprising at least one resource and passing these to the transmission module, and the transmission module further comprising means for sending the first LWM2M object and the at least one resource to the first M2M device so as to configure the first M2M device to perform an operational status check on the second M2M device.

The configuration module 1601 may further comprise means for configuring the second M2M device so that the first device can perform the operational status check on said second M2M device.

The configuration module 1601 may further comprise means for generating a second LWM2M object comprising at least one resource and passing these to the transmission module, and the transmission module further comprising means for sending the second LWM2M object and the at least one resource to the second M2M device so as to configure the second M2M device so that the first device can perform the operational status check on said second M2M device.

Figure 17 illustrates functional units in another embodiment of a M2M device 1700 which may execute methods 1000 and 1100, for example according to computer readable instructions received from a computer program. It will be understood that the units illustrated in figure 17 are software implemented functional units, and may be realized in any appropriate combination of software modules. The software modules may be executed by a processor.

Referring to figure 17, the M2M device comprises a transmission module 1702 for receiving information from a M2M server, and a configuration module 1701 for configuring itself based on the information received so as to perform an operational status check on the second M2M device. The M2M device further comprises a status check module 1703 for performing the operational status check on the second M2M device, and where the transmission module 1702 further comprises means for sending said operational status check to the M2M server.

The transmission module 1702 may further comprise means for only sending the operational status check of the second M2M device to the M2M server if the operational status check indicates that the second M2M device is faulty.

The transmission module 1702 may further comprise means for receiving a message from the M2M server to terminate performing operational status check on the second M2M device.

The transmission module 1702 may further comprise means for sending an operational status request message to the second M2M device and receiving from the second M2M device an operational status response message

The information received from the server may comprise an operational status response message expected to be received from the second M2M device and the status check module 1703 may further comprise means for comparing the expected operational status response message and the operational status response message received from the second M2M device so as to determine if the second M2M is faulty.

If the operational status response messages do not match then the status check module 1703 determines that the second M2M device is faulty.

Figure 18 illustrates functional units in another embodiment of a M2M device 1800 which may execute methods 1200, for example according to computer readable instructions received from a computer program. It will be understood that the units illustrated in figure 18 are software implemented functional units, and may be realized in any appropriate combination of software modules. The software modules may be executed by a processor.

Referring to figure 18, the M2M device comprises a transmission module 1802 for receiving information from a M2M server, a configuration module 1801 for configuring itself based on said information so that its operational status can be checked by another M2M device. The transmission module 1802 further comprises means for receiving an operational status request from the other M2M device, and sending an operational status response to said other M2M device.

The information received from the server may comprise an operational status request expected to be received from the other M2M device and an operational status response to send to the other device upon receiving an operational status request.

The information received from the server further comprises authorization information comprising an IP address of the other M2M device, a port number on which the M2M device is to send messages to the other M2M device.

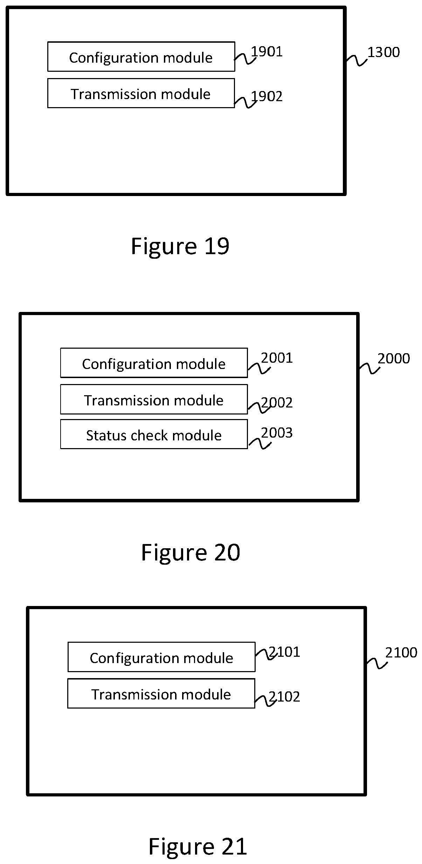

Figure 19 illustrates another embodiment of a M2M server for establishing an operational status check on a M2M device. The M2M server may execute methods 800 and 900 comprises modules that are either software or hardware implemented or a combination of both. The server further comprises a processor for executing the modules and a memory for storing said modules. As seen in figure 19, the M2M server comprises a configuration module 1901 configured to configure the first M2M device to perform an operational status check on the second M2M device, and a transmission module 1902 configured to receive from the first M2M device the operational status check of the second M2M device.

If the operational status check indicates that the second M2M device is faulty, the transmission module 1902 may further be configured to send to the second M2M device a message for correcting the fault or for inactivating said second M2M device.

The transmission module 1902 may further be configured to send a message to the first M2M device for terminating the operational status check of the second M2M device.

The configuration module 1901 may further be configured to generate a first light weight machine-to-machine (LWM2M) object comprising at least one resource and passing these to the transmission module, and the transmission module may further be configured to send the first LWM2M object and the at least one resource to the first M2M device so as to configure the first M2M device to perform an operational status check on the second M2M device.

The configuration module 1901 may further be configured to configure the second M2M device so that the first device can perform the operational status check on said second M2M device.

The configuration module 1901 may further be configured to generate a second LWM2M object comprising at least one resource and passing these to the transmission module, and the transmission module may further be configured to send the second LWM2M object and the at least one resource to the second M2M device so as to configure the second M2M device so that the first device can perform the operational status check on said second M2M device.

Figure 20 illustrates modules in another embodiment of a M2M device 2000 which may execute methods 1000 and 1100. The modules may be software or hardware implemented or a combination of both. The M2M device further comprises a processor for executing the modules and a memory for storing said modules.

Referring to figure 20, the M2M device comprises a transmission module 2002 configured to receive information from a M2M server, and a configuration module 2001 configured to configure itself based on the information received so as to perform an operational status check on the second M2M device. The M2M device further comprises a status check module 2003 for performing the operational status check on the second M2M device, and where the transmission module 2002 may further be configured to send said operational status check to the M2M server.

The transmission module 2002 may further be configured to only send the operational status check of the second M2M device to the M2M server if the operational status check indicates that the second M2M device is faulty.

The transmission module 2002 may further be configured to receive a message from the M2M server to terminate performing operational status check on the second M2M device.

The transmission module 2002 may further be configured to send an operational status request message to the second M2M device and receiving from the second M2M device an operational status response message

The information received from the server may comprise an operational status response message expected to be received from the second M2M device and the status check module 2003 may further be configured to compare the expected operational status response message and the operational status response message received from the second M2M device so as to determine if the second M2M is faulty.

If the operational status response messages do not match then the status check module 2003 determines that the second M2M device is faulty.

Figure 21 illustrates modules in another embodiment of a M2M device 2100 which may execute methods 1200. It will be understood that the modules illustrated in figure 21 are software or hardware implemented or a combination of both. The M2M device further comprises a processor for executing the modules, and a memory for storing the modules.

Referring to figure 21, the M2M device comprises a transmission module 2102 configured to receive information from a M2M server, a configuration module 2101 configured to configure itself based on said information so that its operational status can be checked by another M2M device. The transmission module 2102 is further configured to receive an operational status request from the other M2M device, and send an operational status response to said other M2M device.

The information received from the server may comprise an operational status request expected to be received from the other M2M device and an operational status response to send to the other device upon receiving an operational status request.

The information received from the server further comprises authorization information comprising an IP address of the other M2M device, a port number on which the M2M device is to send messages to the other M2M device.

Aspects of the present invention thus provide, methods, apparatus, computer programs and a system for establishing an operational status of a M2M device. The responsibility of checking the operational status or the health of M2M devices in a M2M network is delegated by a M2M server such that the M2M devices monitor one another. Aspects of the invention provide advantages such as no risk of single point of failure and the M2M server is not overloaded with processing messages related to maintaining the health of a M2M network.

The methods of the present invention may be implemented in hardware, or as software modules running on one or more processors. The methods may also be carried out according to the instructions of a computer program, and the present invention also provides a computer readable medium having stored thereon a program for carrying out any of the methods described herein. A computer program embodying the invention may be stored on a computer-readable medium, or it could, for example, be in the form of a signal such as a downloadable data signal provided from an Internet website, or it could be in any other form.

It should be noted that the above-mentioned embodiments illustrate rather than limit the invention, and that those skilled in the art will be able to design many alternative embodiments without departing from the scope of the appended claims. The word "comprising" does not exclude the presence of elements or steps other than those listed in a claim, "a" or "an" does not exclude a plurality, and a single feature or other unit may fulfil the functions of several units recited in the claims. Any reference signs in the claims shall not be construed so as to limit their scope.

## Claims

1. A machine-to-machine, M2M, server for establishing an operational status of a M2M device in a M2M network, the server comprising;
a configuration module (1601, 1901) for configuring a first M2M device to perform an operational status check on a second M2M device, and for configuring the second M2M device so that its operational status can be checked by the first M2M device and
a transmission module (1602, 1902) for receiving from the first M2M device the operational status check of the second M2M device.

2. A machine-to-machine server as claimed in claim 1, wherein if the operational status check indicates that the second M2M device is faulty, the transmission module (1602, 1902) further comprises means for sending to the second M2M device a message for correcting the fault or for inactivating said second M2M device.

3. A machine-to-machine server according to claim 2, wherein the transmission module (1602, 1902) further comprises means for sending a message to the first M2M device for terminating the operational status check of the second M2M device.

4. A machine-to-machine server according to any of claims 1 to 3, wherein the configuration module (1601, 1901) further comprises means for generating a first light weight machine-to-machine (LWM2M) object comprising at least one resource and passing these to the transmission module, and the transmission module (1602, 1902) further comprising means for sending the first LWM2M object and the at least one resource to the first M2M device so as to configure the first M2M device to perform an operational status check on the second M2M device.

5. A machine-to-machine server according to any of claims 1 to 4, wherein the configuration module (1601, 1901) further comprises means for configuring the second M2M device so that the first device can perform the operational status check on said second M2M device.

6. A machine-to-machine server according to claim 5, wherein the configuration module (1601, 1901) further comprises means for generating a second LWM2M object comprising at least one resource and passing these to the transmission module, and the transmission module (1602, 1902) further comprising means for sending the second LWM2M object and the at least one resource to the second M2M device so as to configure the second M2M device so that the first device can perform the operational status check on said second M2M device.

7. A machine-to-machine, M2M, device for establishing an operational status of a second M2M device, the M2M device comprises;
a transmission module (1702, 2002) for receiving information from a M2M server, and
a configuration module (1701, 2002) for configuring itself based on the information received so as to perform an operational status check on the second M2M device, and
a status check module (1703, 2003) for performing the operational status check on the second M2M device, and where the transmission module further comprises means for sending said operational status check to the M2M server.

8. A M2M device according to claim 7, wherein the transmission module (1702, 2002) comprises means for only sending the operational status check of the second M2M device to the M2M server if the operational status check indicates that the second M2M device is faulty.

9. A M2M device according to claim 8, wherein the transmission module (1702, 2002) further comprises means for receiving a message from the M2M server to terminate performing operational status check on the second M2M device.

10. A M2M device according to any of claims 7 to 9, wherein the transmission module (1702, 2002) further comprises means for sending an operational status request message to the second M2M device and receiving from the second M2M device an operational status response message

11. A M2M device according to claim 10, wherein the information received from the server comprises an operational status response message expected to be received from the second M2M device and the status check module (1703, 2003) further comprises means for comparing the expected operational status response message and the operational status response message received from the second M2M device so as to determine if the second M2M is faulty.

12. A M2M device according to claim 11, wherein if the operational status response messages do not match then the status check module determines that the second M2M device is faulty.

13. A machine-to-machine, M2M, device, for establishing its operational status, the device comprises;
a transmission module (1802) for receiving information from a M2M server,
a configuration module (1801) for configuring itself based on said information so that its operational status can be checked by another M2M device, and
wherein the transmission module (1802) further comprises means for receiving an operational status request from the other M2M device, and sending an operational status response to said other M2M device.

14. A M2M device according to claim 13, wherein the information received from the server comprises an operational status request expected to be received from the other M2M device and an operational status response to send to the other device upon receiving an operational status request.

15. An apparatus comprising a M2M device as claimed in any of claims 7 to 14, wherein the apparatus is a vehicle, user equipment or an appliance.

16. A method performed by a machine-to-machine, M2M, server (1300) for establishing an operational status of a M2M device in a M2M network, the method comprising;
configuring (901) a first M2M device to perform an operational status check on the second M2M device;
configuring (901a) a second M2M device so that its operational status can be
checked by the first M2M device; and
receiving (902) from the first M2M device the operational status check of the second M2M device.

17. A method performed by a machine-to-machine, M2M, device (1400) for establishing an operational status of a second M2M device, the method comprising;
receiving (1101) information from a M2M server;
configuring itself based on the information received so as to perform an operational status check on the second M2M device, and
performing (1102) the operational status check on the second M2M device, and wherein the method further comprises sending said operational status check to the M2M server.

18. A method performed by a machine-to-machine, M2M, device (1500), for establishing its operational status, the method comprises;
receiving (1201) information from a M2M server,
configuring itself based on said information so that its operational status can be checked by another M2M device, and
wherein the method further comprises receiving (1202) an operational status request from the other M2M device, and sending an operational status response to said other M2M device.

## Patentansprüche

1. Maschine-zu-Maschine-,M2M-,Server zum Festlegen eines Betriebszustands eines M2M-Geräts in einem M2M-Netzwerk, wobei der Server umfasst:
ein Konfigurationsmodul (1601, 1901) zum Konfigurieren eines ersten M2M-Geräts zum Durchführen einer Betriebszustandsprüfung an einem zweiten M2M-Gerät und zum derartigen Konfigurieren des M2M-Geräts, dass sein Betriebszustand vom ersten M2M-Gerät geprüft werden kann, und
ein Sendemodul (1602, 1902) zum Empfangen der Betriebszustandsprüfung des zweiten M2M-Geräts vom ersten M2M-Gerät.

2. Maschine-zu-Maschine-Server nach Anspruch 1, wobei, wenn die Betriebszustandsprüfung anzeigt, dass das zweite M2M-Gerät fehlerhaft ist, das Sendemodul (1602, 1902) ferner Mittel zum Senden einer Nachricht zum Korrigieren des Fehlers oder zum Deaktivieren des zweiten M2M-Geräts an das erste M2M-Gerät umfasst.

3. Maschine-zu-Maschine-Server nach Anspruch 2, wobei das Sendemodul (1602, 1902) ferner Mittel zum Senden einer Nachricht zum Beenden der Betriebszustandsprüfung des zweiten M2M-Geräts an das erste M2M-Gerät umfasst.

4. Maschine-zu-Maschine-Server nach einem der Ansprüche 1 bis 3, wobei das Konfigurationsmodul (1601, 1901) ferner Mittel zum Erzeugen eines ersten Lightweight-Maschine-zu-Maschine-,LWM2M,-Objekts, das mindestens eine Ressource umfasst, und Weitergeben dieser an das Sendemodul umfasst, und das Sendemodul (1602, 1902) ferner Mittel zum Senden des ersten LWM2M-Objekts und der mindestens einen Ressource an das erste M2M-Gerät umfasst, um das erste M2M-Gerät zum Durchführen einer Betriebszustandsprüfung am zweiten M2M-Gerät zu konfigurieren.

5. Maschine-zu-Maschine-Server nach einem der Ansprüche 1 bis 4, wobei das Konfigurationsmodul (1601, 1901) ferner Mittel zum derartigen Konfigurieren des zweiten M2M-Geräts umfasst, dass das erste Gerät die Betriebszustandsprüfung am zweiten M2M-Gerät durchführen kann.

6. Maschine-zu-Maschine-Server nach Anspruch 5, wobei das Konfigurationsmodul (1601, 1901) ferner Mittel zum Erzeugen eines zweiten LWM2M,-Objekts, das mindestens eine Ressource umfasst, und Weitergeben dieser an das Sendemodul umfasst, und das Sendemodul (1602, 1902) ferner Mittel zum Senden des zweiten LWM2M-Objekts und der mindestens einen Ressource an das zweite M2M-Gerät umfasst, um das zweite M2M-Gerät so zu konfigurieren, dass das erste Gerät die Betriebszustandsprüfung am zweiten M2M-Gerät durchführen kann.

7. Maschine-zu-Maschine-,M2M-,Gerät zum Festlegen eines Betriebszustands eines zweiten M2M-Geräts in einem M2M-Netzwerk, wobei das M2M-Gerät umfasst:
ein Sendemodul (1702, 2002) zum Empfangen von Informationen von einem M2M-Server, und
ein Konfigurationsmodul (1701, 2002) zum Selbstkonfigurieren basierend auf den empfangenen Informationen, um eine Betriebszustandsprüfung am zweiten M2M-Gerät durchzuführen, und
ein Zustandsprüfmodul (1703, 2003) zum Durchführen der Betriebszustandsprüfung am zweiten M2M-Gerät, und wobei das Sendemodul ferner Mittel zum Senden der Betriebszustandsprüfung an den M2M-Server umfasst.

8. M2M-Gerät nach Anspruch 7, wobei das Sendemodul (1702, 2002) Mittel zum Senden der Betriebszustandsprüfung des zweiten M2M-Geräts nur dann an den M2M-Server umfasst, wenn die Betriebszustandsprüfung anzeigt, dass das zweite M2M-Gerät fehlerhaft ist.

9. M2M-Gerät nach Anspruch 8, wobei das Sendemodul (1702, 2002) ferner Mittel zum Empfangen einer Nachricht vom M2M-Server zum Beenden des Durchführens der Betriebszustandsprüfung am zweiten M2M-Gerät umfasst.

10. M2M-Gerät nach einem der Ansprüche 7 bis 9, wobei das Sendemodul (1702, 2002) ferner Mittel zum Senden einer Betriebszustandsanforderungsnachricht an das zweite M2M-Gerät und Empfangen einer Betriebszustandsantwortnachricht vom zweiten M2M-Gerät umfasst.

11. M2M-Gerät nach Anspruch 10, wobei die vom Server empfangenen Informationen eine Betriebszustandsantwortnachricht umfassen, von der erwartet wird, dass sie vom anderen M2M-Gerät empfangen wird, und das Zustandsprüfmodul (1703, 2003) ferner Mittel zum Vergleichen der erwarteten Betriebszustandsantwortnachricht und der vom zweiten M2M-Gerät empfangenen Betriebszustandsantwortnachricht umfasst, um zu bestimmen, ob das zweite M2M-Gerät fehlerhaft ist.

12. M2M-Gerät nach Anspruch 11, wobei das Zustandsprüfmodul dann, wenn die Betriebszustandsantwortnachrichten nicht übereinstimmen, bestimmt, dass das zweite M2M-Gerät fehlerhaft ist.

13. Maschine-zu-Maschine-,M2M-,Gerät zum Festlegen seines Betriebszustand, wobei das Gerät umfasst:
ein Sendemodul (1802) zum Empfangen von Informationen von einem M2M-Server,
ein Konfigurationsmodul (1801) zum Selbstkonfigurieren basierend auf den Informationen, so dass sein Betriebszustand von einem anderen M2M-Gerät geprüft werden kann, und
wobei das Sendemodul (1802) ferner Mittel zum Empfangen einer Betriebszustandsanforderungsnachricht vom anderen M2M-Gerät und Senden einer Betriebszustandsantwort an das andere M2M-Gerät umfasst.

14. M2M-Gerät nach Anspruch 13, wobei die vom Server empfangenen Informationen eine Betriebszustandsanforderung, von der erwartet wird, dass sie vom anderen M2M-Gerät empfangen wird, und eine Betriebszustandsantwort zum Senden an das andere Gerät bei Empfang einer Betriebszustandsanforderung umfassen.

15. Vorrichtung, umfassend ein M2M-Gerät nach einem der Ansprüche 7 bis 14, wobei die Vorrichtung ein Fahrzeug, eine Benutzereinrichtung oder ein Haushaltsgerät ist.

16. Verfahren, das von einem Maschine-zu-Maschine-,M2M-,Server (1300) durchgeführt wird, zum Festlegen eines Betriebszustands eines M2M-Geräts in einem M2M-Netzwerk, wobei das Verfahren umfasst:
Konfigurieren (901) eines ersten M2M-Geräts zum Durchführen einer Betriebszustandsprüfung am zweiten M2M-Gerät;
derartiges Konfigurieren (901a) eines zweiten M2M-Geräts, dass sein Betriebszustand vom ersten M2M-Gerät geprüft werden kann; and
Empfangen (902) der Betriebszustandsprüfung des zweiten M2M-Geräts vom ersten M2M-Gerät.

17. Verfahren, das von einem Maschine-zu-Maschine-,M2M-,Gerät (1400) durchgeführt wird, zum Festlegen eines Betriebszustands eines zweiten M2M-Geräts in einem M2M-Netzwerk, wobei das Verfahren umfasst:
Empfangen (1101) von Informationen von einem M2M-Server;
Selbstkonfigurieren basierend auf den empfangenen Informationen, um eine Betriebszustandsprüfung am zweiten M2M-Gerät durchzuführen, und
Durchführen (1102) der Betriebszustandsprüfung am zweiten M2M-Gerät, und wobei das Verfahren ferner ein Senden der Betriebszustandsprüfung an den M2M-Server umfasst.

18. Verfahren, das von einem Maschine-zu-Maschine-,M2M-,Gerät (1500) durchgeführt wird, zum Festlegen seines Betriebszustands, wobei das Verfahren umfasst;
Empfangen (1201) von Informationen von einem M2M-Server;
Selbstkonfigurieren basierend auf den Informationen, so dass sein Betriebszustand von einem anderen M2M-Gerät geprüft werden kann, und
wobei das Verfahren ferner ein Empfangen (1202) einer Betriebszustandsanforderungsnachricht vom anderen M2M-Gerät und Senden einer Betriebszustandsantwort an das andere M2M-Gerät umfasst.

## Revendications

1. Serveur machine à machine, M2M, pour établir un état de fonctionnement d'un dispositif M2M dans un réseau M2M, le serveur comprenant :
un module de configuration (1601, 1901) pour configurer un premier dispositif M2M afin de réaliser un contrôle d'état de fonctionnement sur un deuxième dispositif M2M, et pour configurer le deuxième dispositif M2M de sorte que son état de fonctionnement puisse être contrôlé par le premier dispositif M2M, et
un module de transmission (1602, 1902) pour recevoir, depuis le premier dispositif M2M, le contrôle d'état de fonctionnement du deuxième dispositif M2M.

2. Serveur machine à machine selon la revendication 1, dans lequel, si le contrôle d'état de fonctionnement indique que le deuxième dispositif M2M est défectueux, le module de transmission (1602, 1902) comprend en outre des moyens pour envoyer, au deuxième dispositif M2M, un message pour corriger le défaut ou pour désactiver ledit deuxième dispositif M2M.

3. Serveur machine à machine selon la revendication 2, dans lequel le module de transmission (1602, 1902) comprend en outre des moyens pour envoyer un message au premier dispositif M2M pour terminer le contrôle d'état de fonctionnement du deuxième dispositif M2M.

4. Serveur machine à machine selon l'une quelconque des revendications 1 à 3, dans lequel le module de configuration (1601, 1901) comprend en outre des moyens pour générer un premier objet machine à machine de poids léger (LWM2M) comprenant au moins une ressource et les passer au module de transmission, et le module de transmission (1602, 1902) comprenant en outre des moyens pour envoyer le premier objet LWM2M et l'au moins une ressource au premier dispositif M2M de manière à configurer le premier dispositif M2M afin de réaliser un contrôle d'état de fonctionnement sur le deuxième dispositif M2M.

5. Serveur machine à machine selon l'une quelconque des revendications 1 à 4, dans lequel le module de configuration (1601, 1901) comprend en outre des moyens pour configurer le deuxième dispositif M2M de sorte que le premier dispositif puisse réaliser le contrôle d'état de fonctionnement sur ledit deuxième dispositif M2M.

6. Serveur machine à machine selon la revendication 5, dans lequel le module de configuration (1601, 1901) comprend en outre des moyens pour générer un deuxième objet LWM2M comprenant au moins une ressource et les passer au module de transmission, et le module de transmission (1602, 1902) comprenant en outre des moyens pour envoyer le deuxième objet LWM2M et l'au moins une ressource au deuxième dispositif M2M de manière à configurer le deuxième dispositif M2M afin que le premier dispositif puisse réaliser le contrôle d'état de fonctionnement sur ledit deuxième dispositif M2M.

7. Dispositif machine à machine, M2M, pour établir un état de fonctionnement d'un deuxième dispositif M2M, le dispositif M2M comprend :
un module de transmission (1702, 2002) pour recevoir des informations depuis un serveur M2M ; et
un module de configuration (1701, 2002) pour se configurer sur la base des informations reçues de manière à réaliser un contrôle d'état de fonctionnement sur le deuxième dispositif M2M, et
un module de contrôle d'état (1703, 2003) pour réaliser le contrôle d'état de fonctionnement sur le deuxième dispositif M2M, et où le module de transmission comprend en outre des moyens pour envoyer ledit contrôle d'état de fonctionnement au serveur M2M.

8. Dispositif M2M selon la revendication 7, dans lequel le module de transmission (1702, 2002) comprend des moyens pour n'envoyer le contrôle d'état de fonctionnement du deuxième dispositif M2M au serveur M2M que si le contrôle d'état de fonctionnement indique que le deuxième dispositif M2M est défectueux.

9. Dispositif M2M selon la revendication 8, dans lequel le module de transmission (1702, 2002) comprend en outre des moyens pour recevoir un message depuis le serveur M2M afin de terminer la réalisation du contrôle d'état de fonctionnement sur le deuxième dispositif M2M.

10. Dispositif M2M selon l'une quelconque des revendications 7 à 9, dans lequel le module de transmission (1702, 2002) comprend en outre des moyens pour envoyer un message de demande d'état de fonctionnement au deuxième dispositif M2M et recevoir, depuis le deuxième dispositif M2M, un message de réponse d'état de fonctionnement.

11. Dispositif M2M selon la revendication 10, dans lequel les informations reçues depuis le serveur comprennent un message de réponse d'état de fonctionnement censé être reçu depuis le deuxième dispositif M2M et le module de contrôle d'état (1703, 2003) comprend en outre des moyens pour comparer le message de réponse d'état de fonctionnement attendu et le message de réponse d'état de fonctionnement reçu depuis le deuxième dispositif M2M de manière à déterminer si le deuxième dispositif M2M est défectueux.

12. Dispositif M2M selon la revendication 11, dans lequel, si les messages de réponse d'état de fonctionnement ne concordent pas, alors le module de contrôle d'état détermine que le deuxième dispositif M2M est défectueux.

13. Dispositif machine à machine, M2M, pour établir son état de fonctionnement, le dispositif comprend :
un module de transmission (1802) pour recevoir des informations depuis un serveur M2M ;
un module de configuration (1801) pour se configurer sur la base desdites informations de sorte que son état de fonctionnement puisse être contrôlé par un autre dispositif M2M, et
dans lequel le module de transmission (1802) comprend en outre des moyens pour recevoir une demande d'état de fonctionnement depuis l'autre dispositif M2M, et envoyer une réponse d'état de fonctionnement audit autre dispositif M2M.

14. Dispositif M2M selon la revendication 13, dans lequel les informations reçues depuis le serveur comprennent une demande d'état de fonctionnement censée être reçue depuis l'autre dispositif M2M et une réponse d'état de fonctionnement à envoyer à l'autre dispositif à la réception d'une demande d'état de fonctionnement.

15. Appareil comprenant un dispositif M2M selon l'une quelconque des revendications 7 à 14, dans lequel l'appareil est un véhicule, un équipement d'utilisateur ou un appareil ménager.

16. Procédé réalisé par un serveur machine à machine, M2M, (1300) pour établir un état de fonctionnement d'un dispositif M2M dans un réseau M2M, le procédé comprenant :
la configuration (901) d'un premier dispositif M2M pour réaliser un contrôle d'état de fonctionnement sur le deuxième dispositif M2M ;
la configuration (901a) d'un deuxième dispositif M2M de sorte que son état de fonctionnement puisse être contrôlé par le premier dispositif M2M ; et
la réception (902), depuis le premier dispositif M2M, du contrôle d'état de fonctionnement du deuxième dispositif M2M.

17. Procédé réalisé par un dispositif machine à machine, M2M, (1400) pour établir un état de fonctionnement d'un deuxième dispositif M2M, le procédé comprenant :
la réception (1101) d'informations depuis un serveur M2M ;
sa configuration sur la base des informations reçues de manière à réaliser un contrôle d'état de fonctionnement sur le deuxième dispositif M2M, et
la réalisation (1102) du contrôle d'état de fonctionnement sur le deuxième dispositif M2M, et dans lequel le procédé comprend en outre l'envoi dudit contrôle d'état de fonctionnement au serveur M2M.

18. Procédé réalisé par un dispositif machine à machine, M2M, (1500) pour établir son état de fonctionnement, le procédé comprend :
la réception (1201) d'informations depuis un serveur M2M ;
sa configuration sur la base desdites informations de sorte que son état de fonctionnement puisse être contrôlé par un autre dispositif M2M, et
dans lequel le procédé comprend en outre la réception (1202) d'une demande d'état de fonctionnement depuis l'autre dispositif M2M, et l'envoi d'une réponse d'état de fonctionnement audit autre dispositif M2M.
